# EUROPEAN PATENT APPLICATION

(11) **EP 3 192 831 A1**
(43) Date of publication of application: **19.07.2017**
(21) Application number: 15840900.3
(22) Date of filing: 08.09.2015
(51) Int. Cl.: C08L 23/02, B29C 45/00, C08J 9/06, C08L 25/02

(54) **THERMOPLASTIC ELASTOMER COMPOSITION AND MOLDED ARTICLE OF SAME**

(30) Priority: 08.09.2014 JP 2014181885
(71) Applicant: Mitsui Chemicals, Inc., Minato-ku Tokyo 105-7122 (JP)
(72) Inventor: KURITA, Hayato, Sodegaura-shi Chiba 299-0265 (JP); ENNA, Masahiro, Sodegaura-shi Chiba 299-0265 (JP)
(74) Representative: J A Kemp
(86) International application number: PCT/JP2015/075397
(87) International publication number: WO 2016/039310

(57) **Abstract**

This invention relates to a thermoplastic elastomer composition having a type A hardness (i.e., the momentary value) of 55 or less in accordance with JIS K6253, which comprises 35 to 65 parts by weight of an olefin-based thermoplastic elastomer (A) having a type A hardness (i.e., the momentary value) of 75 or less in accordance with JIS K6253 and 65 to 35 parts by weight of a styrene-based thermoplastic elastomer (B) having a type A hardness (i.e., the momentary value) of 60 or less in accordance with JIS K6253 (with the total amount of components (A) and (B) being 100 parts by weight) and a molded thermoplastic elastomer product obtained via molding of such composition.

## Description

### Technical Field

The present invention relates to a thermoplastic elastomer composition and a molded product obtained therefrom.

### Background Art

Thermoplastic elastomers are light in weight and easily recyclable. Thus, thermoplastic elastomers are extensively used as energy-saving and resource-saving elastomers, and, in particular, as alternatives to vulcanized rubber or vinyl chloride resin, for automobile parts, industrial machinery parts, electric/electronic parts, and constructional materials.

In particular, an olefin-based thermoplastic elastomer comprises, as starting materials, an ethylene-propylene-non-conjugated diene copolymer (EPDM) and a crystalline polyolefin such as polypropylene. Thus, the specific gravity thereof is lower, and its durability in terms of heat aging resistance, weather resistance, and the like is superior to those of other types of thermoplastic elastomers. However, further improvement is necessary depending on the application in question.

For example, vulcanized rubber is mainly composed of EPDM. Accordingly, it can be easily supplemented with a softening agent such as oil, and it is likely to soften. When the rubber content of an olefin-based thermoplastic elastomer is increased so as to soften the elastomer, in general, the flowability thereof deteriorates, and moldability becomes poor, disadvantageously.

A vulcanized rubber sponge prepared by foaming vulcanized rubber can be imparted with further flexibility as a result of foaming. In addition, interior members of an automobile are laminated products of skin materials using vinyl chloride resin, polyurethane, and an olefin-based thermoplastic elastomer and polyurethane foam or polypropylene foam. A process of producing such laminated products comprises a step of sheet molding, a step of lamination, a step of foaming, and a step of integration with a substrate. Thus, such process is complicated. From the viewpoint of process simplification and weight reduction of parts, foaming of a thermoplastic elastomer has been studied.

In general, it is difficult for an olefin-based thermoplastic elastomer to undergo foaming. According to JP S48-26838 A (1973) and JP S54-112967 A (1979), for example, olefin-based plastic components are degraded when they are subjected to dynamic heat treatment in the presence of an organic peroxide, the melt tension thereof becomes deteriorated, and defoaming is thus likely to take place. Even if a foamed product is obtained, the foaming factor is approximately 1.5 times at most, and skin roughening caused by defoaming is disadvantageously apparent.

JP 2006-175825 A (Paragraph 0026) contains a description to the following effect. Excessively low type A hardness (i.e., flexibility) of a composition used for a foam layer in the composite molded product composed of a polyolefin-based composite resin layer integrated with a foam layer prepared by foam injection molding of a composition used for a foam layer causes "bottoming out" to the polyolefin-based composite resin layer (i.e., the substrate) when the composite molded product is used. Accordingly, it is preferable that the type A hardness of the composition used for a foam layer be 60 or higher.

While a thermoplastic elastomer composition comprising an olefin-based thermoplastic elastomer together with a styrene-based thermoplastic elastomer has been reported (e.g., JP 2000-119447 A and JP 2010-24356 A), greater styrene-based thermoplastic elastomer content is likely to result in stickiness and lowered heat resistance. Thus, such composition has often been mainly composed of an olefin-based thermoplastic elastomer.

### Summary of the Invention

### Objects to Be Attained by the Invention

It is an object of the present invention to provide a thermoplastic elastomer composition that is capable of foam injection molding, is flexible, and is not subject to "bottoming-out."

### Means for Attaining the Objects

The present invention is summarized as follows.
(1) A thermoplastic elastomer composition having a type A hardness (i.e., the momentary value) of 55 or less in accordance with JIS K6253, which comprises 35 to 65 parts by weight of an olefin-based thermoplastic elastomer (A) having a type A hardness (i.e., the momentary value) of 75 or less in accordance with JIS K6253 and 65 to 35 parts by weight of a styrene-based thermoplastic elastomer (B) having a type A hardness (i.e., the momentary value) of 60 or less in accordance with JIS K6253 (with the total amount of components (A) and (B) being for 100 parts by weight).
(2) The thermoplastic elastomer composition according to (1), wherein a compression set measured at 70°C 24 hours later is 95% or less in accordance with JIS K6262.
(3) The thermoplastic elastomer composition according to (1) or (2), which is obtained by adding a foaming agent (C).
(4) A molded thermoplastic elastomer product, which is obtained by molding the thermoplastic elastomer composition according to (1) or (2).
(5) A foam-molded thermoplastic elastomer product, which is obtained by molding the thermoplastic elastomer according to (3).

### Effects of the Invention

The thermoplastic elastomer composition according to the present invention has flexibility and mold processability (injection foamability).

### Embodiments for Carrying out the Invention

Hereafter, the thermoplastic elastomer composition according to the present invention is described in detail.

The thermoplastic elastomer composition according to the present invention comprises: an olefin-based thermoplastic elastomer (A); a styrene-based thermoplastic elastomer (B); and, according to need, a foaming agent (C).

### [Olefin-based thermoplastic elastomer (A)]

The olefin-based thermoplastic elastomer (A) used in the present invention is not particularly limited. For example, a conventional perfectly or partially crosslinked polyolefin-based thermoplastic elastomer can be used.

Examples of partially crosslinked polyolefin-based thermoplastic elastomers within such perfectly or partially crosslinked polyolefin-based thermoplastic elastomers include:
(1) a partially crosslinked thermoplastic elastomer, which is obtained by subjecting a mixture comprising a peroxide-crosslinkable olefin-based copolymer rubber (a) and a peroxide-degradable olefin-based plastic (b) or a mixture comprising a peroxide-crosslinkable olefin-based copolymer rubber (a), a peroxide-degradable olefin-based plastic (b), a peroxide-uncrosslinkable rubbery material (c), and/or a mineral-oil-based softening agent (d) to dynamic heat treatment in the presence of an organic peroxide; and
(2) a partially crosslinked thermoplastic elastomer, which is obtained by subjecting a mixture comprising a peroxide-crosslinkable olefin-based copolymer rubber (a), a peroxide-degradable olefin-based plastic (b), a peroxide-uncrosslinkable rubbery material (c), and/or a mineral-oil-based softening agent (d) to dynamic heat treatment in the presence of an organic peroxide so as to obtain a crosslinked rubber composition and homogeneously incorporating an olefin-based plastic (e) into the rubber composition.

An example of a peroxide-crosslinkable olefin-based copolymer rubber (a) described above is an amorphous, random, elastic copolymer that is mainly composed of an olefin, such as ethylene-propylene copolymer rubber, ethylene-propylene-non-conjugated diene rubber, or ethylene-butadiene copolymer rubber. When such copolymer rubber is mixed with a peroxide and kneaded during heating, the flowability thereof is reduced or eliminated due to crosslinking.

Specific examples of the peroxide-crosslinkable olefin-based copolymer rubbers include the following.
(1) Rubbers of an ethylene-α-olefin copolymer
   [Ethylene:α-olefin (molar ratio) = about 95:5 to 50:50]
(2) Rubbers of an ethylene-α-olefin-non-conjugated diene copolymer
   [Ethylene:α-olefin (molar ratio) = about 95:5 to 50:50]

Specific examples of the above mentioned α-olefin include ethylene, propylene, 1-butene, 1-pentene, 3-methyl-1-butene, 1-hexene, 3-methyl-1-pentene, 4-methyl-1-pentene, and 1-octene.

Specific examples of the non-conjugated dienes include: cyclic dienes, such as dicyclopentadiene, cyclooctadiene, methylenenorbornene (e.g. 5-methylene-2-norbornene), ethylidenenorbornene (e.g. 5-ethylidene-2-norbornene), methyltetrahydroindene, 5-vinyl-2-norbornene, 5-isopropylidene-2-norbornene, 6-chloromethyl-5-isopropenyl-2-norbornene, and norbonadiene; and chain dienes, such as 1,4-hexadiene, 3-methyl-1,4-hexadiene, 4-methyl-1,4-hexadiene, 5-methyl-1,4-hexadiene, 4,5-dimethyl-1,4-hexadiene, 6-methyl-1,6-octadiene, 7-methyl-1,6-octadiene, 6-ethyl-1,6-octadiene, 6-propyl-1,6-octadiene, 6-butyl-1,6-octadiene, 6-methyl-1,6-nonadiene, 7-methyl-1,6-nonadiene, 6-ethyl-1,6-nonadiene, 7-ethyl-1,6-nonadiene, 6-methyl-1,6-decadiene, 7-methyl-1,6-decadiene, 6-methyl-1,6-undecadiene, and 7-methyl-1,6-octadiene.

The Mooney viscosity ML₁₊₄ values (100°C) of these copolymer rubbers are usually 10 to 300, and preferably 30 to 250. The iodine values are, if the above non-conjugated diene is copolymerized, preferably 25 or less.

The olefin-based copolymer rubber may be present in any crosslinked state, i.e., an un-crosslinked state, a partially crosslinked state, or a perfectly crosslinked state, in the thermoplastic elastomer. In the present invention, however, it is preferable that the copolymer rubber be present in a partially crosslinked state.

The term "peroxide-degradable olefin-based plastic (b)" refers to an olefin-based plastic that is thermally degraded upon mixing thereof with peroxide during heating, thereby reducing its molecular weight, and it then achieves improved resin flowability. Examples thereof include isotactic polypropylene, or a copolymer of propylene with a small amount of another α-olefin, such as a propylene-ethylene copolymer, a propylene-1-butene copolymer, a propylene-1-hexene copolymer, and a propylene-4-methyl-1-pentene copolymer.

Examples of the peroxide-degradable olefin-based plastic (b) include homopolymers or copolymers of α-olefins having 2 to 20 carbon atoms.

Specific examples of the above mentioned α-olefins include ethylene, propylene, 1-butene, 1-pentene, 3-methyl-1-butene, 1-hexene, 3-methyl-1-pentene, 4-methyl-1-pentene, and 1-octene.

Specific examples of the peroxide-degradable olefin-based plastic (b) include the (co)polymers described below:
(1) homopolymers of propylene;
(2) random copolymers of propylene with another α-olefin at a molar percentage of 10% or less;
(3) block copolymers of propylene with another α-olefin at a molar percentage of 30% or less;
(4) homopolymers of 1-butene;
(5) random copolymers of 1-butene with another α-olefin at a molar percentage of 10% or less;
(6) homopolymers of 4-methyl-1-pentene; and
(7) random copolymers of 4-methyl-1-pentene with another α-olefin at a molar percentage of 20% or less.

The term "a peroxide-uncrosslinkable rubbery material (c)" refers to, for example, polyisobutylene, butyl rubber, atactic polypropylene, or propylene-α-olefin copolymer rubber comprising propylene at a molar percentage of 50% or more and being a hydrocarbon-based rubbery material that is not crosslinked upon mixing and kneading with peroxide during heating and thus it does not lose its flowability.

The term "a mineral-oil-based softening agent (d)" refers to a petroleum fraction having a high boiling point that is used to weaken the intermolecular actions of the rubber and facilitate processing at the time of general roll-processing of rubber, assist the dispersal of carbon black, white carbon, and the like, or improve the flexibility and elasticity of rubber by reducing the hardness of vulcanized rubber. Such agent is classified as a paraffin-based, naphthene-based, or aromatic-based agent. Examples of mineral-oil-based softening agents include paraffin-based process oils and naphthene-based process oils.

The term "an olefin-based plastic (e)" refers to, for example, homopolymers or copolymers of α-olefins, such as ethylene, propylene, 1-butene, 1-pentene, 3-methyl-1-butene, 1-hexene, 3-methyl-1-pentene, 4-methyl-1-pentene,or 1-octene, or copolymers of α-olefin with a small amount of another polymerizable monomer at a molar percentage of 10% or less, such as an ethylene-vinyl acetate copolymer, ethylene-acrylic acid copolymer, or ethylene-methacrylic acid copolymer.

Examples of rubbers used in the present invention include, in addition to the olefin-based copolymer rubber, diene type rubbers such as styrene-butadiene rubbers (SBR), nitrile rubbers (NBR), natural rubbers (NR), and butyl rubbers (IIR).

In the thermoplastic elastomer (A) used in the present invention, the formulation ratio by weight of the peroxide-degradable olefin-based plastic (b) to the peroxide-crosslinkable olefin-based copolymer rubber (a) (i.e., (b):(a)) is generally in the range from 90:10 to 10:90, and preferably in the range from 70:30 to 15:85.

When the olefin-based copolymer rubber is used in combination with another rubber, such other rubber is incorporated generally in an amount of 40 parts by weight or less, and preferably 5 to 20 parts by weight, relative to the total 100 parts by weight accounted for by the peroxide-degradable olefin-based plastic together with the rubber.

A thermoplastic elastomer (A) that is preferably used in the present invention comprises crystalline polypropylene and ethylene-α-olefin copolymer rubber or ethylene-α-olefin-non-conjugated diene copolymer rubber, such components exist in a partially crosslinked state in the thermoplastic elastomer, and the formulation ratio by weight of the crystalline polypropylene to the rubber (crystalline polypropylene:rubber) is in the range from 70:30 to 10:90.

A more specific example of the thermoplastic elastomer (A) preferably used in the present invention is a thermoplastic elastomer obtained by subjecting the mixture comprising 30 to 90 parts by weight of rubber (a-1) comprising an ethylene-propylene copolymer rubber or ethylene-propylene-diene copolymer rubber, 70 to 10 parts by weight of crystalline polypropylene (b-1) (with the total amount of the components (a-1) and (b-1) being 100 parts by weight), and 5 to 150 parts by weight of rubber (c) other than the rubber (a-1) and/or the mineral-oil-based softening agent (d) to dynamic heat treatment in the presence of an organic peroxide, wherein the rubber (a-1) is partially crosslinked.

Specific examples of the aforementioned organic peroxides include dicumyl peroxide, di-tert-butyl peroxide, 2,5-dimethyl-2,5-di-(tert-butylperoxy)hexane, 2,5-dimethyl-2,5-di-(tert-butylperoxy)hexyne-3, 1,3-bis(tert-butylperoxyisopropyl)benzene, 1,1-bis(tert-butylperoxy)-3,3,5-trimethylcyclohexane, n-butyl 4,4-bis(tert-butylperoxy)valerate, benzoyl peroxide, p-chlorobenzoyl peroxide, 2,4-dichlorobenzoyl peroxide, tert-butyl peroxybenzoate, tert-butylperoxyisopropyl carbonate, diacetyl peroxide, lauroyl peroxide, and tert-butyl cumyl peroxide.

From the viewpoint of odor and scorch stability, 2,5-dimethyl-2,5-di-(tert-butylperoxy)hexane, 2,5-dimethyl-2,5-di-(tent-butylperoxy)hexyne-3, 1,3-bis(tert-butylperoxyisopropyl)benzene, 1,1-bis(tert-butylperoxy)-3,3,5-trimethylcyclohexane, and n-butyl 4,4-bis(tert-butylperoxy)valerate are more preferable, and 1,3-bis(tert-butylperoxyisopropyl)benzene is the most preferable.

In the present invention, the organic peroxide is used in a ratio of 0.01 to 5 parts by weight, and preferably 0.05 to 3 parts by weight, relative to the total 100 parts by weight accounted for by the crystalline polyolefin and the rubber together.

Upon crosslinking treatment by the above organic peroxide, crosslinking aids such as sulfur, p-quinone dioxime, p,p'-dibenzoylquinone dioxime, N-methyl-N-4-dinitrosoaniline, nitrosobenzene, diphenylguanidine, trimethylolpropane, N,N'-m-phenylenedimaleimide, divinylbenzene, triallyl cyanurate, and triallyl isocyanurate, polyfunctional methacrylate monomers, such as ethylene glycol dimethacrylate, diethylene glycol dimethacrylate, polyethylene glycol dimethacrylate, trimethylolpropane trimethacrylate, and allyl methacrylate, or polyfunctional vinyl monomers, such as vinyl butyrate and vinyl stearate, can be incorporated.

By using such compounds, a uniform and mild crosslinking reaction can be expected. In the present invention, in particular, divinylbenzene is the most preferable. Divinylbenzene is easy to handle, it is satisfactorily compatible with the crystalline polyolefin and the rubber that serve as the main components for the crosslinking treatment, and it has the ability to dissolve organic peroxides and to work as a dispersant thereof. Accordingly, the effects of crosslinking by heat treatment are uniform, and a thermoplastic elastomer composition balanced in terms of flowability and physical properties can be obtained.

The crosslinking aids or polyfunctional vinyl monomers are preferably used in a ratio of 0.01 to 5 parts by weight, and particularly preferably 0.05 to 3 parts by weight, relative to the entire amount to be crosslinked. It is disadvantageous when the ratio of the crosslinking aids or polyfunctional vinyl monomers to be incorporated exceed 5 parts by weight for the following reasons. When the amount of the organic peroxide to be incorporated is excessive, the crosslinking reaction proceeds too rapidly, and the resulting thermoplastic elastomer suffers from poor flowability. When the amount of organic peroxide to be incorporated is too small, in contrast, the crosslinking aids or polyfunctional vinyl monomers remain in the thermoplastic elastomer as unreacted monomers, and the resulting thermoplastic elastomer may experience changes in physical properties caused by heat history at the time of the processing/molding. Thus, the crosslinking aids or polyfunctional vinyl monomers should not be incorporated in excessive amounts.

When subjected to "dynamic heat treatment" herein, the components described above are kneaded in a molten state. As the kneading apparatus, conventional kneading apparatuses, such as an open type mixing roll or a non-open type apparatus such as Bumbury's mixer, extruder, kneader, and continuous mixer, are used. Among these, non-open type kneading apparatuses are preferable, and kneading is preferably carried out in an inactive gas environment, such as a nitrogen or carbon dioxide gas environment.

Kneading is preferably carried out at a temperature at which the half-life of the organic peroxide to be used is less than one minute. Kneading is generally carried out at 150°C to 280°C, and preferably from 170°C to 270°C, generally for 0.5 to 20 minutes, and preferably for 1 to 10 minutes. The shear force to be applied, in terms of the shear velocity, is set so as to fall within the range of 10 to 50,000 sec⁻¹, and preferably of 100 to 10,000 sec⁻¹.

The perfectly crosslinked thermoplastic elastomer can be prepared in accordance with the methods for preparing thermoplastic elastomer (1) and (2) above while modifying the amount of the organic peroxide to be used, the kneading duration, and other conditions.

It is necessary for the type A hardness (i.e., the momentary value) of the olefin-based thermoplastic elastomer (A) used in the present invention to be 75 or less in accordance with JIS K6253. If the type A hardness (i.e., the momentary value) is above 75, it is difficult to adjust type A hardness (i.e., the momentary value) of the thermoplastic elastomer composition according to the present invention to 55 or less in accordance with JIS K6253. That is, the effects of the present invention cannot be attained. The type A hardness (i.e., the momentary value) is generally 1 to 73, preferably 1 to 65, further preferably 1 to 60, and particularly preferably 1 to 55.

### [Styrene-based thermoplastic elastomer (B)]

Specific examples of styrene-based thermoplastic elastomer (B) used in the present invention include styrene-isoprene block copolymers, hydrogenated products of styrene-isoprene block copolymers (SEP), hydrogenated products of styrene-isoprene-styrene block copolymers (SEPS; polystyrene-polyethylene/propylene-polystyrene block copolymers), styrene-butadiene copolymers, and hydrogenated products of styrene-butadiene block copolymers (SEBS; polystyrene-polyethylene/butylene-polystyrene block copolymers). More specific examples include Septon (manufactured by Kuraray Co., Ltd.), EARNESTON (manufactured by Kuraray Plastics Co., Ltd.), HYBRAR (manufactured by Kuraray Co., Ltd.), KRATON and KRATON G (manufactured by Kraton Polymer), Europrene SOLT (manufactured by Versalis), JSR-TR and JSR-SIS (manufactured by JSR), Quintac (manufactured by Zeon Corporation), and Tuftec (manufactured by Asahi Kasei Corporation) (tradenames).

It is necessary for the type A hardness (i.e., the momentary value) of the styrene-based thermoplastic elastomer (B) used in the present invention to be 60 or less in accordance with JIS K6253. If the type A hardness (i.e., the momentary value) is above 60, it is difficult to adjust the type A hardness (i.e., the momentary value) of the thermoplastic elastomer composition according to the present invention to 55 or less in accordance with JIS K6253. That is, the effects of the present invention cannot be attained. The type A hardness (i.e., the momentary value) is preferably 1 to 50.

The thermoplastic elastomer composition according to the present invention comprises the olefin-based thermoplastic elastomer (A) and the styrene-based thermoplastic elastomer (B) at a ratio of (A) to (B) from 35:65 to 65:35 by weight. The composition comprising (A) and (B) within the aforementioned ratio range can achieve both flexibility and mold processability (injection foamability). If the figure for the olefin-based thermoplastic elastomer (A) falls below that of the lower limit of the ratio range mentioned above, heat resistance becomes insufficient, stickiness is increased, and a desirable texture cannot be attained. If the figure for the olefin-based thermoplastic elastomer (A) exceeds that of the upper limit of the ratio range mentioned above, in contrast, flexibility becomes insufficient. The composition comprising (A) and (B) at the aforementioned ratio can achieve both flexibility and mold processability (injection foamability), foam is distributed homogeneously in the resulting foam-molded product, and such foam-molded product can avoid the bottoming-out phenomenon. The ratio of (A) to (B) is preferably 37:63 to 63:37, more preferably 40:60 to 60:40, and further preferably 45:55 to 55:45.

It is necessary for the thermoplastic elastomer composition according to the present invention to exhibit the type A hardness (i.e., the momentary value) of 55 or less in accordance with JIS K6253. If the type A hardness (i.e., the momentary value) is above 55, the resulting foam-molded product becomes hardened and lacks soft texture.

It is preferable that the thermoplastic elastomer composition according to the present invention exhibit a compression set of 95% or less measured at 70°C 24 hours later in accordance with JIS K6262. In general, leather products would change their shapes in conformity with the shape of each user's body (e.g., the hands or feet), they would eventually fit each user's shape with the elapse of time, and such a fit is often regarded as being valuable. Accordingly, the compression set does not necessarily have a value of 0, but such value is preferably low, so that the material can be used over a long period of time without becoming worn out with the elapse of time (in other words, the material retains its elasticity). Specifically, it is preferable that the compression set be 5% or more when measured at 70°C 24 hours later in accordance with JIS K6262.

### [Thermoplastic elastomer composition]

The thermoplastic elastomer composition according to the present invention can be produced by subjecting the olefin-based thermoplastic elastomer (A), the styrene-based thermoplastic elastomer (B), the foaming agent (C), according to need, and other components to melt-kneading.

As the Kneading apparatus, for example, a mixing roll, an intensive mixer (e.g., Bumbury's mixer or kneaded), or a single-screw or twin-screw extruder can be used, and a non-open type apparatus is preferable.

The thermoplastic elastomer composition according to the present invention is preferably allowed to foam with the addition of the foaming agent (C), according to need. Examples of the foaming agent (C) include an inorganic or organic, thermodegradable foaming agent (i.e., a chemical foaming agent), carbon dioxide, nitrogen, and a mixture of carbon dioxide and nitrogen.

Examples of inorganic, thermodegradable foaming agents include inorganic carbonates, such as sodium bicarbonate, sodium carbonate, ammonium bicarbonate, and ammonium carbonate, and nitrites, such as ammonium nitrite.

Examples of organic, thermodegradable foaming agents include: nitroso compounds, such as N,N'-dimethyl-N,N'-dinitrosoterephthalamide and N,N'-dinitrosopentamethylenetetramine; azo compounds, such as azodicarbonamide, azobisisobutyronitrile, azocyclohexylnitrile, azodiaminobenzene, and barium azodicaroboxylate; sulfonyl hydrazide compounds, such as benzenesulfonyl hydrazide, toluenesulfonyl hydrazide, p,p'-oxybis(benzenesulfonyl hydrazide), and diphenylsulfone-3,3'-disulfonyl hydrazide; and azide compounds, such as calcium azide, 4,4'-diphenyldisulfonyl azide, and p-toluenesulfonyl azide.

When carbon dioxide or nitrogen is used, a foaming thermoplastic elastomer composition is melted in a resin plasticization cylinder at 100°C to 300°C, so as to prepare a melt-foaming thermoplastic elastomer composition in which a foaming thermoplastic elastomer composition, and carbon dioxide or nitrogen are compatible with each other.

The foaming agent (C) is used in a ratio of generally 0.5 to 30 parts by weight, and preferably 1 to 20 parts by weight, relative to 100 parts by weight of the foaming thermoplastic elastomer composition.

A foaming aid can be added, according to need. The amount thereof is in a ratio of generally 0.01 to 10 parts by weight, and preferably 0.02 to 5 parts by weight, relative to 100 parts by weight of the foaming thermoplastic elastomer composition.

Examples of foaming aids include: metal compounds, such as zinc, calcium, lead, iron, and barium; higher fatty acid, such as stearic acid, and metallic salt thereof; and inorganic fine particles, such as talc, barium sulfate, and silica. Specific examples include: mixtures of polyvalent carboxylic acids, such as citric acid, oxalic acid, fumaric acid, phthalic acid, malic acid, tartaric acid, cyclohexane-1,2-dicarboxylic acid, camphoric acid, ethylenediaminetetraacetic acid, triethylenetetramine hexaacetic acid, and nitrilotriacetic acid, with inorganic carbonate compounds, such as sodium bicarbonate, sodium aluminum bicarbonate, and potassium bicarbonate; and intermediates generated upon the reaction described above, such as salts of polyvalent carboxylic acids, such as sodium dihydrogen citrate and potassium oxalate.

Foaming aids have functions of lowering the forming agent degradation temperature, promoting degradation of forming agents, foam nucleation, foam homogenization, and the like, and the use thereof is generally preferable. In the case of compounds that are degraded at temperatures around the extrusion temperature in the form of starting pellets or at the foam melting temperature, foam cell diameters can be shortened, and homogeneous production thereof may be possible.

It is particularly preferable that the thermoplastic elastomer composition according to the present invention be allowed to foam with the use of mixtures of inorganic or organic thermodegradable foaming agents, polyvalent carboxylic acids as foaming aids, and hydrogen carbonate, and specifically, a mixture of citric acid and sodium bicarbonate or a reaction intermediate thereof (i.e., disodium citrate).

Such foaming agents or foaming aids may be dry-mixed prior to injection molding so as to be degraded at the time of injection molding. Alternatively, foaming agents or foaming aids may be melt-mixed in pellets in advance.

Foamed products can be prepared from the olefin-based thermoplastic elastomer composition according to the present invention employing any means, without particular limitation. Foamed products can be prepared with the use of molding machines used in cases of known resin processing via, for example, extrusion molding, press molding, injection molding, blow molding, extrusion-blow molding, injection blow molding, inflation molding, stamping molding, compression molding, or bead molding.

A method of using supercritical carbon dioxide as a foaming agent to prepare a foam-molded product via extrusion molding is exemplified. Specifically, the thermoplastic elastomer composition according to the present invention is melted in an extruder, carbon dioxide is heated to its critical temperature (31°C) or above and at the critical pressure (7.4 to 40 MPa) for carbon dioxide, so as to prepare supercritical carbon dioxide, and the resultant is then mixed with the thermoplastic elastomer composition melted in the extruder. Subsequently, the melted thermoplastic elastomer composition that has been mixed with supercritical carbon dioxide is transferred to a die connected to the tip of the extruder adjusted to the optimal temperature for foaming, the composition is extruded from the die to the air to rapidly reduce the pressure, carbon dioxide is gasified to yield foam, and the resultant is cooled to solidify with the use of a subsequently connected cooling apparatus. Thus, the foam-molded products of interest are obtained. It is preferable that the temperature of the thermoplastic elastomer composition be adjusted so that it is within the range from 110°C to 250°C at the time of extrusion.

A method of preparing the foam-molded products via press molding is also exemplified. Specifically, the chemical foaming agents and pellets of the thermoplastic elastomer composition are introduced into the heated mold within a press molding machine, the thermoplastic elastomer composition is allowed to melt, either with or without the application of pressure, followed by foaming. In this way, the foam-molded products are prepared. In such cases, the mold temperature is preferably from 110°C to 250°C.

Subsequently, a method of preparing the foam-molded thermoplastic elastomer product according to the present invention via injection molding is exemplified. Specifically, the thermoplastic elastomer composition may be heat-melted with the use of an injection molding machine, and the composition may be injected into a mold so as to foam at the nozzle tip, thus enabling the formation of the foam-molded products. At the time of injection, the resin temperature is preferably 110°C to 250°C.

The thermoplastic elastomer composition according to the present invention has a high flowability. Thus, it is preferable to obtain foam-molded products via injection molding. Further, a thermoplastic elastomer composition is injected into the cavity of a closed injection mold, and a mobile mold is allowed to migrate while remaining in contact with the mold wall, which is facilitated by resin expansion. Such expansion is caused by foam gas after the completion of injection. The mobile mold is then allowed to stop at a position within the standard thickness designated in advance. Core-back foam injection molding, which is carried out by allowing the mobile mold to move back after the mold has cooled and then removing the product, is preferable.

In addition to the olefin-based thermoplastic elastomer (A), the styrene-based thermoplastic elastomer (B), and the foaming agent (C), the thermoplastic elastomer composition according to the present invention can contain other types of known resins in amounts that do not adversely affect the object of the present invention.

Examples of such other resin include homopolymers or copolymers of α-olefin having 2 to 20 carbon atoms.

Specific examples of the above mentioned α-olefin include ethylene, propylene, 1-butene, 1-pentene, 3-metlryl-1-butene, 1-hexene, 3-methyl-1-pentene, 4-methyl-1-pentene, and 1-octene.

Specific examples of the other resins include the (co)polymers described below:
(1) homopolymers of ethylene (which may be obtained through a low-pressure method or a high-pressure method);
(2) copolymers of ethylene with another α-olefin or vinyl monomer such as vinyl acetate or ethyl acrylate at a molar percentage of 10% or less;
(3) homopolymers of propylene;
(4) random copolymers of propylene with another α-olefin at a molar percentage of 10% or less;
(5) block copolymers of propylene with another α-olefin at a molar percentage of 30% or less;
(6) homopolymers of 1-butene;
(7) random copolymers of 1-butene with another α-olefin at a molar percentage of 10% or less;
(8) homopolymers of 4-methyl-1-pentene; and
(9) random copolymers of 4-methyl-1-pentene with another α-olefin at a molar percentage of 20% or less.

Such other resins are preferably the homopolymers or copolymers of polypropylene (3) to (5), and they may have either or both the isotactic and/or syndiotactic structures.

The melting point of the homopolymers or copolymers of polypropylene (3) to (5) determined via differential scanning calorimetry (DSC) is generally 40°C to 170°C, preferably 50°C to 167°C, and further preferably 60°C to 165°C. The temperature is held at 200°C for 5 minutes, and it is reduced to -20°C at a rate of -20°C/min. Then, it is increased to 180° again at a rate of 20°C/min, following which the melting point is determined via DSC. The melting temperature of the homopolymers or copolymers of polypropylene (3) to (5) is preferably within the range described above, so that sufficient heat resistance can be achieved.

The melt flow rate (MFR; ASTM D 1238-65T, 230°C, load 2.16 kg) of the homopolymers or copolymers of polypropylene (3) to (5) is generally 0.01 to 100 g/10 min, and preferably 0.05 to 70 g/10 min.

A method for producing the homopolymers or copolymers of polypropylene (3) to (5) is not particularly limited, and any conventional method can be employed.

When the thermoplastic elastomer composition according to the present invention comprises the homopolymers or copolymers of polypropylene (3) to (5) in an amount of 0.5 to 15 parts by weight, and preferably 1 to 12 parts by weight, relative to the total 100 parts by weight accounted for by the olefin-based thermoplastic elastomer (A) and the styrene-based thermoplastic elastomer (B) together, a thermoplastic elastomer composition having sufficient flexibility, and mold processability (injection foamability) can be attained.

The homopolymers or copolymers of polypropylene (3) to (5) preferably comprise polypropylene exhibiting a melt tension of at least 3 g at 190°C.

Melt tension is determined with the use of a capillary rheometer (extrusion nozzle diameter: 2.095 mm; nozzle length: 8 mm) at an extrusion temperature of 190°C, an extrusion rate of 10 mm/min, and a withdrawal rate of 4 m/min.

Examples of polypropylenes exhibiting melt tension of at least 3 g at 190°C include polypropylenes of broad molecular weight distribution that comprise, in part thereof, high-molecular-weight components, polypropylenes comprising long-chain branches introduced via electron beam cross-linking, and partially crosslinked polypropylenes. From the viewpoint of foamability, appearance, and recyclability of the molded product, polypropylenes of broad molecular weight distribution that comprise, in part thereof, high-molecular-weight components are preferable. The limiting viscosity (η) of the high-molecular-weight components is generally 3 to 15 dl/g, preferably 4 to 14 dl/g, and further preferably 5 to 13 dl/g, and the high-molecular-weight components are contained in polypropylenes in amounts of generally 1% to 49% by weight, preferably 3% to 45% by weight, and further preferably 5% to 40% by weight.

The molecular weight distribution (Mw/Mn) of polypropylene exhibiting melt tension of at least 3 g at 190°C is generally 5 to 20, preferably 6 to 18, and further preferably 7 to 15.

The melt flow rate (MFR; ASTM D 1238-65T, 230°C, load 2.16 kg) of the polypropylene exhibiting melt tension of at least 3 g at 190°C is generally 0.01 to 100 g/10 min, and preferably 0.05 to 50 g/10 min.

The polypropylene exhibiting melt tension of at least 3 g at 190°C is incorporated in amounts of generally 1 to 60 parts by weight, preferably 3 to 55 parts by weight, and further preferably 5 to 50 parts by weight, relative to 100 parts by weight accounted for by the homopolymers or copolymers of polypropylene (3) to (5).

The total amount of the homopolymers or copolymers of polypropylene (3) to (5) added as the other resins and the homopolymers or copolymers of polypropylene in the olefin-based thermoplastic elastomer (A) is preferably 5 to 30 parts by weight, relative to the total 100 parts by weight accounted for by the olefin-based thermoplastic elastomer (A) and the styrene-based thermoplastic elastomer (B) together.

The thermoplastic elastomer composition according to the present invention can comprise, in addition to the olefin-based thermoplastic elastomer (A), the styrene-based thermoplastic elastomer (B), and the foaming agent (C), additives such as known inorganic fillers, reinforcements, softening agents, heat stabilizers (processing heat stabilizers), antioxidants, weathering stabilizers, antistatic agents, crystal nucleating agents, coloring agents, and lubricants, in amounts that would not adversely affect the object of the present invention.

The total amount of the inorganic filler, reinforcement, softening agent, heat stabilizer (processing heat stabilizer), antioxidant, weathering stabilizer, antistatic agent, crystal nucleating agent, coloring agent, and lubricant is generally 100 parts by weight or less, and preferably 50 parts by weight or less, relative to the total 100 parts by weight accounted for by the thermoplastic elastomer composition according to the present invention.

The total amount of the olefin-based thermoplastic elastomer (A) and the styrene-based thermoplastic elastomer (B) is generally 50 to 100 parts by weight, and preferably 65 to 100 parts by weight, relative to the total 100 parts by weight accounted for by the thermoplastic elastomer composition according to the present invention.

The softening agents are those usually used for rubber. Specific examples thereof include: petroleum substances such as process oil, lubricating oil, paraffin, liquid paraffin, petroleum asphalt, and vaseline; synthetic oils such as low-molecular-weight ethylene-α-olefin random copolymers; coal tars such as coal tar and coal tar pitch; fatty oil such as castor oil, linseed oil, rape oil, soybean oil, and coconut oil; tall oil; waxes such as beeswax, carnauba wax, and lanolin; fatty acids and metal salts thereof such as ricinolic acid, palmitic acid, stearic acid, barium stearate, and calcium stearate; synthetic high-molecular-weight substances such as petroleum resin, coumarone-indene resin, and atactic polypropylene; ester plasticizers such as dioctyl phthalate, dioctyl adipate, and dioctyl sebacate; microcrystalline wax, rubber substitute (factice), liquid polybutadiene, modified liquid polybutadiene, and liquid Thiokol. Paraffinic process oils are particularly preferable.

When a softening agent is added to the thermoplastic elastomer composition according to the present invention, it may be added at the time of production thereof. Alternatively, a softening agent may be added to the olefin-based thermoplastic elastomer (A), the styrene-based thermoplastic elastomer (B), or an ethylene-α-olefin-non-conjugated polyene copolymer rubber constituting the olefin-based thermoplastic elastomer (A) in advance, although means of addition are not limited thereto. A softening agent is added in an amount of generally 20 to 130 parts by weight, preferably 22 to 128 parts by weight, and further preferably 24 to 126 parts by weight, relative to the total 100 parts by weight accounted for by the olefin-based thermoplastic elastomer (A) and the styrene-based thermoplastic elastomer (B) together. Incorporation of a softening agent into the thermoplastic elastomer composition according to the present invention is preferable since it allows further foamability and flexibility to be attained.

Examples of relevant lubricants include higher fatty acid amides, metal soap, wax, silicone oil, and fluorine-based polymers. Higher fatty acid amides, silicone oil, and fluorine-based polymers are particularly preferable.

Examples of higher fatty acid amides include: saturated fatty acid amides, such as lauric acid amide, palmitic acid amide, stearic acid amide, and behenic acid amide; unsaturated fatty acid amides, such as erucic acid amide, oleic acid amide, brassidic acid amide, and elaidic acid amide; and bis-fatty acid amides, such as methylene bis-stearic acid amide, methylene bis-oleic acid amide, ethylene bis-stearic acid amide, and ethylene bis-oleic acid amide.

Examples of silicone oil include dimethyl silicone oil, phenyl methyl silicone oil, alkyl silicone oil, fluorosilicone oil, tetramethyl tetraphenyl trisiloxane, and denatured silicone oil.

Examples of fluorine-based polymers include polytetrafluoroethylene and vinylidene fluoride copolymers.

Specific examples of inorganic fillers include calcium carbonate, calcium silicate, clay, kaolin, talc, silica, diatomaceous earth, mica powder, asbestos, alumina, barium sulfate, aluminum sulfate, calcium sulfate, basic magnesium carbonate, molybdenum disulfide, graphite, glass fiber, glass balloon, shirasu balloon, basic magnesium sulfate whisker, calcium titanate whisker, and aluminum borate whisker.

### [Putative mechanisms allowing the composition of the present invention to achieve both flexibility and injection foamability]

Crosslinkable rubber in the olefin-based thermoplastic elastomer (A) (e.g., the peroxide-crosslinkable olefin-based copolymer rubber (a) described above) contributes to impartation of flexibility and heat resistance. The styrene-based thermoplastic elastomer (B) also contributes to the imparting of flexibility. In addition, a resin component in the olefin-based thermoplastic elastomer (A) (e.g., the peroxide-degradable olefin-based plastic (b) described above) and the styrene-based thermoplastic elastomer (B) contribute to the development of foam at the time of foam molding, and fine foam can be obtained with the composition according to the present invention. Since a thermoplastic elastomer composition has both flexibility and injection foamability, a molded product obtained therefrom can be flexible, thus allowing it to avoid the "bottoming-out" phenomenon.

### [Application of thermoplastic elastomer composition]

The thermoplastic elastomer composition according to the present invention can be subjected to various known molding techniques, so that a molded thermoplastic elastomer product can be obtained. Specific examples of such techniques include extrusion molding, press molding, injection molding, calendar molding, and hollow molding. In addition, the molded products such as sheets obtained via the molding techniques described above can be subjected to secondary processing, such as thermoforming.

While the applications of the molded products of a thermoplastic elastomer according to the present invention are not particularly limited, such products can be preferably used for various known applications, such as automobile parts, civil engineering and building components, electrical and electronic components, sanitary goods, and films and sheets.

### [Automobile parts]

The molded thermoplastic elastomer product according to the present invention is applicable to automobile parts, such as interior parts and exterior parts for automobiles. Examples thereof include weather strip materials, bumper moldings, side moldings, air spoilers, air duct hoses, wire harness grommets, rack and pinion boots, suspension cover boots, glass guide, inner belt line seals, corner moldings, glass encapsulation, hood seals, glass run channels, secondary seals, various types of packing material, and hoses. In particular, the olefin-based thermoplastic elastomer composition according to the present invention is excellent in terms of injection moldability and injection foamability. Thus, molded products obtained via injection molding or foam injection molding are particularly preferable.

### [Civil engineering and building components]

The molded thermoplastic elastomer product according to the present invention is applicable to civil engineering and building components. Examples thereof include civil engineering and building materials such as soil improvements sheets, water stop plates, noise control materials, various gaskets and sheets, water stop materials, joint materials, and window frames for buildings. In particular, the thermoplastic elastomer composition according to the present invention is excellent in terms of injection moldability and injection foamability. Thus, molded products obtained via injection molding or foam injection molding are particularly preferable.

### [Electrical and electronic components]

The molded thermoplastic elastomer product according to the present invention is applicable to electrical and electronic components such as wire coating materials, connectors, caps, and plugs. In particular, the thermoplastic elastomer composition according to the present invention is excellent in terms of injection moldability and injection foamability. Thus, molded products obtained via injection molding or foam injection molding are particularly preferable.

### [Sanitary goods]

The molded thermoplastic elastomer product according to the present invention is applicable to sanitary goods such as hygiene products, disposable diapers, and toothbrush handles. In particular, the thermoplastic elastomer composition according to the present invention is excellent in terms of injection moldability and injection foamability. Thus, molded products obtained via injection molding or foam injection molding are particularly preferable.

### [Films and sheets]

The molded thermoplastic elastomer product according to the present invention is applicable to films and sheets, such as infusion bags, medical containers, interior and exterior parts of automobiles, beverage bottles, clothing containers, food wrapping materials, food containers, retort containers, pipes, transparent substrates, and sealants. In particular, the thermoplastic elastomer composition according to the present invention is excellent in terms of injection moldability and injection foamability. Thus, molded products obtained via injection molding or foam injection molding are particularly preferable.

### [Other]

Examples of other applications of the molded thermoplastic elastomer product according to the present invention include footwear such as shoe soles and sandals, leisure products such as swimming fins, swimming goggles, golf club grips, and baseball bat grips, gaskets, waterproof fabrics, belts, garden hoses, anti-slip tapes for stairs, and anti-slip tapes for distribution pallets.

The applications of the molded thermoplastic elastomer product according to the present invention are not limited to those described above, and such molded product has a wide variety of applications.

This description includes part or all of the content as disclosed in the description of Japanese Patent Application No. 2014-181885, which is a priority document of the present application.

### Examples

Hereafter, the present invention is described in greater detail with reference to the examples, although the scope of the present invention is not limited to these examples.

Physical properties were measured and evaluated in the manner described below. (1) MFR (g/10 min)

MFR was measured in accordance with ASTM D 1238 at 230°C and a load of 2.16 kgf.

### (2) Measurement of Shore hardness

In accordance with JIS K6253, Shore hardness was measured with the use of a 6-mm-thick laminate of 2-mm-thick press sheets (a laminate of 3 sheets each with a thickness of 2 mm) using a Shore A durometer. The Shore A hardness (i.e., the momentary value) was determined immediately after the measurement.

### (3) Compression set (CS)

In accordance with JIS K 6250, the prepared sheets were laminated and then subjected to the compression set test in accordance with JIS K6262.

The test was performed using a 12-mm-thick laminate of 6 sheets (each 2 mm-thick), the laminate was compressed by 25% at 70°C for 24 hours, and measurement was carried out 30 minutes after the strain (compression) had been eliminated.

### (4) Foamed layer conditions

The foamed layer of the foam-molded product was cut, and the foaming conditions were observed under a stereoscopic microscope (x10).

The conditions of the foamed layer were evaluated in accordance with the following standards.

Excellent: Foaming conditions are uniform and no tearing or bursting is observed.

Good: While foaming conditions are not completely uniform, no tearing or bursting is observed.

Fair: Foaming conditions are not uniform, and tearing or bursting is observed in part.

Poor: Foam has experienced significant tearing or bursting significantly or swollen and thus are impossible to evaluate.

### (5) Appearance

The exterior of the resulting foam-molded product was visually evaluated in accordance with the following standards.

Excellent: The surface is smooth without warpage, such as sink marks, pit marks, or weld lines.

Good: The surface is free of warpage, such as sink marks, pit marks, or weld lines.

Poor: The defects described above have been observed, and practical use of the product is difficult.

### (6) Flexibility

The surface of the foam-molded product was pushed with a finger and evaluated in accordance with the following standards.

Excellent: Not much force is necessary to push a finger into the product, and the surface is satisfactorily soft.

Good: While some force is necessary to push a finger into the product, the surface is satisfactorily soft.

Poor: The surface is as hard as a molded resin product, a considerable amount of force is necessary to push a finger into the product, and the surface is not soft.

### (7) Stickiness

The surface of the foam-molded product was touched by sliding a finger across it and evaluation was made in accordance with the following standards.

Good: The surface of the molded product does not stick to the finger when touched, and the surface is not scratchy.

Poor: The surface of the molded product sticks to the finger when touched, and the surface is scratchy.

### (8) Bottoming-out

The surface of the foam-molded product was pushed with a finger and evaluated in accordance with the following standards.

Good: An adequate degree of resilience was observed immediately after pushing, and the hardness of the bottom of the molded product is not sensed.

Poor: The molded product is too hard to push with a finger, or the finger reaches the bottom of the molded product and a sensation of hardness is experienced immediately after pushing.

### [Examples 1 to 8 and Comparative Examples 1 to 3]

### (Mold materials)

### (1) Olefin-based thermoplastic elastomer (A)

### (1-1) Olefin-based thermoplastic elastomer (TPV-1)

Ethylene-propylene-diene copolymer rubber (65 parts by weight; tradename: Mitsui EPT™ 3072 EPM; manufactured by Mitsui Chemicals, Inc.) as peroxide-crosslinkable olefin-based copolymer rubber, 15 parts by weight of a propylene-ethylene block copolymer (tradename: Prime Polypro™ J707G; manufactured by Prime Polymer Co., Ltd.) as a peroxide-degradable olefin-based plastic, 20 parts by weight of butyl rubber (tradename: IIR065; manufactured by ExxonMobil Chemical; unsaturation grade: 0.8 mol%; Mooney viscosity ML₁₊₈ (125°C): 32) as a peroxide-uncrosslinkable rubbery material, and 10 parts by weight of paraffin-based process oil (tradename: Diana Process Oil PW-100; manufactured by Idemitsu Kosan Co., Ltd.) as a softening agent were mixed in advance using a closed mixer (Mixtron BB-16; manufactured by Kobe Steel, Ltd.), the resultant was allowed to pass through a sheet roller so as to flatten it into a sheet, and the resulting sheet was processed into horny pellets using a pelletizer (manufactured by HORAI Co., Ltd.).

Subsequently, 112 parts by weight of the resulting pellets, 0.6 parts by weight of a mixed solution of 0.3 parts by weight of a crosslinking agent (1,3-bis(tert-butylperoxyisopropyl)benzene) and 0.3 parts by weight of a crosslinking aid (divinylbenzene), and 0.1 parts by weight of a phenolic antioxidant (Irganox 1010; manufactured by BASF) were mixed using a tumble blender, and the resulting mixture was allowed to evenly adhere to pellet surfaces.

Subsequently, 112.7 parts by weight of the pellets to the surface of which the crosslinking agent, the crosslinking aid, and the antioxidant had adhered were kneaded using an extruder (Product No. LTX-46; manufactured by Kobe Steel, Ltd.) at 220°C and at a treatment rate of 50 kg/hour, and a partially crosslinked olefin-based thermoplastic elastomer (TPV-1) was obtained. The resulting olefin-based thermoplastic elastomer (TPV-1) exhibited a Shore A hardness (i.e., the momentary value) of 51.

### (1-2) Olefin-based thermoplastic elastomer (TPV-2)

Ethylene-propylene-diene copolymer rubber (67 parts by weight, tradename: Mitsui EPT™ 4100 E; manufactured by Mitsui Chemicals, Inc.) as peroxide-crosslinkable olefin-based copolymer rubber, 16 parts by weight of homopropylene (tradename: Prime Polypro™ F704NP; manufactured by Prime Polymer Co., Ltd.) as a peroxide-degradable olefin-based plastic, and 17 parts by weight of paraffin-based process oil (tradename: Diana Process Oil PW-100; manufactured by Idemitsu Kosan Co., Ltd.) as a softening agent were mixed in advance using a closed mixer (Mixtron BB-16; manufactured by Kobe Steel, Ltd.), the resultant was allowed to pass through a sheet roller to prepare into the form of a sheet, and the resulting sheet was processed into horny pellets using a pelletizer (manufactured by HORAI Co., Ltd.).

Subsequently, 100 parts by weight of the resulting pellets, 1.5 parts by weight of a mixed solution of 1.0 parts by weight of a crosslinking agent (1,3-bis(tert-butylperoxyisopropyl)benzene) and 0.5 parts by weight of a crosslinking aid (divinylbenzene), and 0.1 parts by weight of a phenolic antioxidant (Irganox 1010; manufactured by BASF) were mixed using a tumble blender, and the resulting mixture was allowed to evenly adhere to the pellet surface.

Subsequently, 101.6 parts by weight of the pellets to which the crosslinking agent, the crosslinking aid, and the antioxidant had adhered on the surface and 40 parts by weight of paraffin-based process oil (tradename: Diana Process Oil PW-100; manufactured by Idemitsu Kosan Co., Ltd.) as a softening agent were kneaded using an extruder (Product No. KTX-46; manufactured by Kobe Steel, Ltd.) at 220°C at a treatment rate of 40 kg/hour, and the partially crosslinked olefin-based thermoplastic elastomer (TPV-2) was obtained. The resulting olefin-based thermoplastic elastomer (TPV-2) exhibited the Shore A hardness (i.e., the momentary value) of 46.

### (1-3) Olefin-based thermoplastic elastomer (TPV-3)

Ethylene-propylene-diene copolymer rubber (70 parts by weight, tradename: Mitsui EPT™ 3072 EPM; manufactured by Mitsui Chemicals, Inc.) as peroxide-crosslinkable olefin-based copolymer rubber, 20 parts by weight of homopropylene (tradename: Prime Polypro™ J105G; manufactured by Prime Polymer Co., Ltd.) as a peroxide-degradable olefin-based plastic, 10 parts by weight of a propylene-α-olefin copolymer (tradename: Vistamaxx 6102; manufactured by Exxon Mobil Corporation) as a peroxide-uncrosslinkable rubbery material, and 20 parts by weight of paraffin-based process oil (tradename: Diana Process Oil PW-100; manufactured by Idemitsu Kosan Co., Ltd.) as a softening agent were mixed in advance using a closed mixer (Mixtron BB-16; manufactured by Kobe Steel, Ltd.), the resultant was allowed to pass through a sheet roller to prepare into the form of a sheet, and the resulting sheet was processed into horny pellets using a pelletizer (manufactured by HORAI Co., Ltd.).

Subsequently, 120 parts by weight of the resulting pellets, 0.6 parts by weight of a mixed solution of 0.4 parts by weight of a crosslinking agent (1,3-bis(tert-butylperoxyisopropyl)benzene) and 0.2 parts by weight of a crosslinking aid (divinylbenzene), and 0.1 parts by weight of a phenolic antioxidant (Irganox 1010; manufactured by BASF) were mixed using a tumble blender, and the resulting mixture was allowed to evenly adhere to the pellet surface.

Subsequently, 120.7 parts by weight of the pellets to which the crosslinking agent, the crosslinking aid, and the antioxidant had adhered on the surface were kneaded using an extruder (Product No. KTX-46; manufactured by Kobe Steel, Ltd.) at 220°C at a treatment rate of 50 kg/hour, and the partially crosslinked olefin-based thermoplastic elastomer (TPV-3) was obtained. The resulting olefin-based thermoplastic elastomer (TPV-3) exhibited the Shore A hardness (i.e., the momentary value) of 71.

### (2) Styrene-based thermoplastic elastomer (B)

### (2-1) Styrene-based thermoplastic elastomer (St-1)

Tradename: Septon™ 2063 (manufactured by Kuraray Co., Ltd., Shore A hardness in accordance with JIS K6253: 36)

### (2-2) Styrene-based thermoplastic elastomer (St-2)

Tradename: EARNESTON™ JS20N (manufactured by Kuraray Co., Ltd., Shore A hardness in accordance with JIS K6253: 1)

### (2-3) Styrene-based thermoplastic elastomer (St-3)

Tradename: Tuftec™ H1221 (manufactured by Asahi Kasei Corporation, Shore A hardness in accordance with JIS K6253: 42)

### (2-4) Styrene-based thermoplastic elastomer (St-4)

Tradename: Tuftec™ H1062 (manufactured by Asahi Kasei Corporation, Shore A hardness in accordance with JIS K6253: 67)

### (3) Other resins

### (3-1) Homopolypropylene (PP-1)

Tradename: Prime Polypro™ J105G (manufactured by Prime Polymer Co., Ltd.)

### (3-2) Homopolypropylene (PP-2)

Homo-type polypropylene comprising 12% by mass of high-molecular-weight components exhibiting the limiting viscosity (η) of 8.5 dl/g and the melt flow rate of 3.0 g/10 min

### (3-3) Block polypropylene (PP-3)

Block-type polypropylene exhibiting the melt flow rate (ASTM-D-1238-65T; 230°C, load 2.16 kg) of 55 g/10 min (ethylene unit content: 9 mol%)

### (Kneading, molding, and evaluation)

The materials were weighed in accordance with the amounts shown in Table 1, 0.1 parts by weight of a phenolic antioxidant (Irganox 1010; manufactured by BASF) as a heat stabilizer and 0.1 parts by weight of a diazo weather resistant agent (Tinuvin 326; manufactured by BASF) as a weather resistant agent were thoroughly mixed with 100 parts by weight of the mixture of the materials using a Henschel mixer, the resultant was kneaded using an extruder (Product No. KTX-46; manufactured by Kobe Steel, Ltd.) at 200°C and a treatment rate of 60 kg/hour, and pellets of the thermoplastic elastomer composition were obtained.

Subsequently, 2 parts by weight of a chemical foaming agent (Hydrocerol™ CF; manufactured by Clariant) as a foaming agent was added to 100 parts by weight of the thermoplastic elastomer composition, and the resultant was then subjected to molding using a core-back injection molding machine (150-ton injection molding machine; manufactured by Meiki Co., Ltd.). Injection molding was carried out at an injection temperature of 220°C and a mold temperature of 50°C with a gap in the mold of 2.5 mm, and the molten resin was injected into the mold. After the mold had been filled with resin, the mobile mold was allowed to move by 2 mm, so as to increase the internal volume of the gap, and the molded product was removed therefrom after the completion of cooling. The thickness of the resulting molded product was 4.5 mm, 5-cm-square (vertical and horizontal) test pieces were prepared, and the test pieces were then subjected to various evaluation tests.

The thermoplastic elastomer composition and the foam-molded products were evaluated in accordance with the method described above. The results are shown in Table 1.

**Table 1**

| | | Ex. 1 | Ex. 2 | Comparative Example 1 | Ex. 3 | Ex. 4 | Ex. 5 | Ex. 6 | Comparative Example2 | Comparative Example3 | Ex. 7 | Ex. 8 |
|---|---|---|---|---|---|---|---|---|---|---|---|---|
| Olefin-based thermoplastic elastomer (A) | | | | | | | | | | | | |
| (1-1) | TPV-1 | 50 | 45 | 40 | 47.5 | 47.5 | 47.5 | 47.5 | | | | |
| (1-2) | TPV-2 | | | | | | | | | | 47.5 | |
| (1-3) | TPV-3 | | | | | | | | | | | 47.5 |
| Styrene-based thermoplastic elastomer (B) | | | | | | | | | | | | |
| (2-1) | St-1 | 50 | 45 | 40 | 47.5 | | 25 | 25 | 90 | | 47.5 | 47.5 |
| (2-2) | St-2 | | | | | 47.5 | 22.5 | | | | | |
| (2-3) | St-3 | | | | | | | 22.5 | | | | |
| (2-4) | St-4 | | | | | | | | | 95 | | |
| Other resins | | | | | | | | | | | | |
| (3-1) | PP-1 | | 10 | 20 | | | | | | | | |
| (3-2) | PP-2 | | | | 2.5 | 2.5 | 2.5 | 2.5 | 5 | 2.5 | 2.5 | 2.5 |
| (3-3) | PP-3 | | | | 2.5 | 2.5 | 2.5 | 2.5 | 5 | 2.5 | 2.5 | 2.5 |
| MFR (g/10 min) | 2.16 kgf | 3.5 | 4.8 | 5.6 | 3.7 | 2.9 | 3.1 | 4.1 | 5.2 | 4.2 | 30.5 | 5.1 |
| Shore hardness | Momentary value | 40 | 52 | 79 | 41 | 42 | 47 | 49 | 45 | 71 | 38 | 50 |
| Compression set (CS) (%) | 70°C 24hr | 90.7 | 92.4 | 92.6 | 91.3 | 38.9 | 76.3 | 90 | 85.4 | 100 | 93.9 | 88.5 |
| | | | | | | | | | | | | |
| Foamability evaluation | | | | | | | | | | | | |
| Conditions of foamed layer | | excellent | excellent | good | excellent | good | good | excellent | good | fair | good | good |
| Appearance | | good | excellent | good | excellent | excellent | excellent | excellent | poor | poor | excellent | excellent |
| Flexibility | | excellent | good | poor | excellent | excellent | excellent | excellent | good | poor | excellent | good |
| Stickiness | | good | good | good | good | good | good | good | poor | poor | good | good |
| Bottoming-out | | good | good | poor | good | good | good | good | poor | poor | good | good |

As is apparent from the results shown in Table 1, the thermoplastic elastomer composition according to the present invention has both flexibility and mold processability (injection foamability). While the thermoplastic elastomer composition according to the present invention exhibited the type A hardness (i.e., the momentary value) of 55 or less, the resulting foam-molded product was not substantially subject to "bottoming-out."

All publications, patents, and patent applications cited herein are incorporated herein by reference in their entirety.

## Claims

1. A thermoplastic elastomer composition having a type A hardness (i.e., the momentary value) of 55 or less in accordance with JIS K6253, which comprises 35 to 65 parts by weight of an olefin-based thermoplastic elastomer (A) having a type A hardness (i.e., the momentary value) of 75 or less in accordance with JIS K6253 and 65 to 35 parts by weight of a styrene-based thermoplastic elastomer (B) having a type A hardness (i.e., the momentary value) of 60 or less in accordance with JIS K6253 (with the total amount of components (A) and (B) being 100 parts by weight).

2. The thermoplastic elastomer composition according to claim 1, wherein a compression set measured at 70°C 24 hours later is 95% or less in accordance with JIS K6262.

3. The thermoplastic elastomer composition according to claim 1 or 2, which is obtained by adding a foaming agent (C).

4. A molded thermoplastic elastomer product, which is obtained by molding the thermoplastic elastomer composition according to claim 1 or 2.

5. A foam-molded thermoplastic elastomer product, which is obtained by molding the thermoplastic elastomer according to claim 3.
